# EUROPEAN PATENT APPLICATION

(11) **EP 1 030 424 A1**
(43) Date of publication of application: **23.08.2000**
(21) Application number: 00300938.8
(22) Date of filing: 07.02.2000
(51) Int. Cl.: H02G 3/06

(54) **Duct assembly**

(30) Priority: 17.02.1999 GB 9903587
(71) Applicant: Polysleeve Products Limited, Groby, Leicester LE6 0GN (GB)
(72) Inventor: Barker, John Arthur Polysleeve Prod.Limited, Groby Leicester LE6 0GN (GB)
(74) Representative: Harrison Goddard Foote

(57) **Abstract**

A duct assembly comprising an externally grooved, plastics sleeve and at least one sleeve end arrangement, which arrangement includes a pair of part annular collars each having an internal groove engaging portion and said assembly being capable of arrangement such that one of said collars abuts one side of a wall or partition and the other collar abuts the other side of the wall or partition and the sleeve extends through said wall or partition and said collars

## Description

### FIELD OF THE INVENTION

The present invention relates to duct assemblies and methods of assembling same and more particularly, to assemblies that provide a duct extending through a wall or partition and within which may extend a pipe or cable.

### BACKGROUND TO THE INVENTION

Duct assemblies typically comprise a tubular arrangement or sleeve for encapsulating wiring, cables, pipes or the like. In order to convey the encapsulated wiring through a wall/partition the sleeve traverses the said wall/partition. However, the sleeve is prone to movement and it can be damaged thus exposing the wiring or the like. The problem associated with the prior art is that there is no efficient and effective means of securing the sleeve about the wall/partition and/or within a duct assembly.

### STATEMENTS OF INVENTION

According to the present invention there is provided a duct assembly comprising an externally grooved, plastics sleeve and at least one sleeve end arrangement, which arrangement includes a pair of part annular collars each having an internal groove engaging portion and said assembly being capable of arrangement such that one of said collars abuts one side of a wall or partition and the other collar abuts the other side of the wall or partition and the sleeve extends through said wall or partition and said collars.

The present invention also provides a method of installing a wall or partition traversing duct for a cable or pipe, the method comprising providing a length of externally grooved plastics sleeve in a wall or partition traversing location, mounting a part annular collar, having a groove engaging portion, on the sleeve where it emerges from one side of the wall or partition, and mounting another part annular collar on the sleeve where it emerges from the other side of the wall or partition.

It will be understood that the internal surface of the part annular collar can be grooved or ribbed and that the sleeve is correspondingly externally ribbed or grooved so as to provide complimentary engagement. The provision of grooves or ribs on either component is not intended to limit the scope of the application.

Thus, positioning the part annular collars either side of the wall or partition and about the sleeve, so that each part annular collar abuts a surface of the wall or partition, prevents movement of the sleeve within the duct. In the assembled form, the sleeve is held securely and cannot be withdrawn or pushed into the duct.

Preferably, the part annular collars are made of plastics material by a moulding, machining or other suitable operation.

Preferably said collars are resiliently deformable.

Preferably, the part annular collars are releasable so that the sleeve can be easily removed for repair or maintenance purposes or the sleeve can be replaced.

Preferably, the part annular collars have smooth outer edges or alternatively the outer edges can be profiled, for instance grooved or ribbed.

Preferably, the inner diameter of the part annular collars are commensurate with the diameter of the sleeve.

Preferably, the outer diameter of each part annular collar is at least 10% and ideally at least 20% greater than the inner diameter, thus providing a substantial area of contact between the collar(s) and wall or partition.

It will be appreciated that the thickness of the collar is at least sufficient to provide a groove engaging portion having regard to the corresponding portions on the sleeve.

The present invention also provides a duct assembly as a kit of parts comprising a sleeve and at least two part annular collars.

Throughout the specification, unless the context requires otherwise, the word "comprises" or "comprising", will be understood to imply the inclusion of a stated element or integer or group of elements or integers but not the exclusion of any other element or integer or group of elements or integers.

### DESCRIPTION OF SPECIFIC EMBODIMENTS

The present invention will now be described, by way of example only, and with reference to the accompanying drawings, in which: -
Figure 1-4 illustrate various steps of a method in accordance with the present invention; and
Figure 5 shows a cross-section of the duct assembly installed by the method illustrated in Figures 1-4.

Referring to the accompanying drawings, a duct assembly in accordance with the present invention includes a plastic sleeve 1 having grooves 3 spaced apart along its length, these grooves being provided by radially extending circumferencial projections 5. These projections may be provided on the outer surface only of the plastic sleeve but may also have corresponding grooves on the inner surface, the plastic sleeve being, in effect, a corrugated tube. Typically, sleeve 1 is made of thin plastic material and is both flexible and resilient. It may be provided in long lengths wound on drums. It can be easily cut at any desired position along its length.

Plastics sleeve 1 forms part of the duct assembly of the invention. In use, a suitable length of sleeve 1 extends across a wall or partition and surrounds a cable or pipe extending through the wall or partition. Sleeve 1 may be slit longitudinally, particularly where the pipe or cable is already in position and the sleeve can then be fitted around the pipe or cable. Where the pipe or cable is not already in position then the sleeve may be located in position without slitting it longitudinally and the pipe or cable fed through the installed sleeve.

In order to install the sleeve 1 firmly in position within the wall or partition, sleeve 1 is moved in the direction of arrow A so as to enter aperture 7 provided in end 8 of wall or partition 9. Since the only item, apart from the pipe or cable running through sleeve 1, located within the wall or partition is sleeve 1, the diameter of the hole 7 extending through the wall or partition need be only sufficient to accommodate sleeve 1.

The duct assembly of the invention is provided with at least one sleeve end arrangement 11 and a part annular collar 13A. The part annular 13A is provided with a discontiguous region 15, in order that it may be located on the sleeve by relative transverse movement therebetween, the word "transverse" referring to the sleeve rather than the part annular collar.

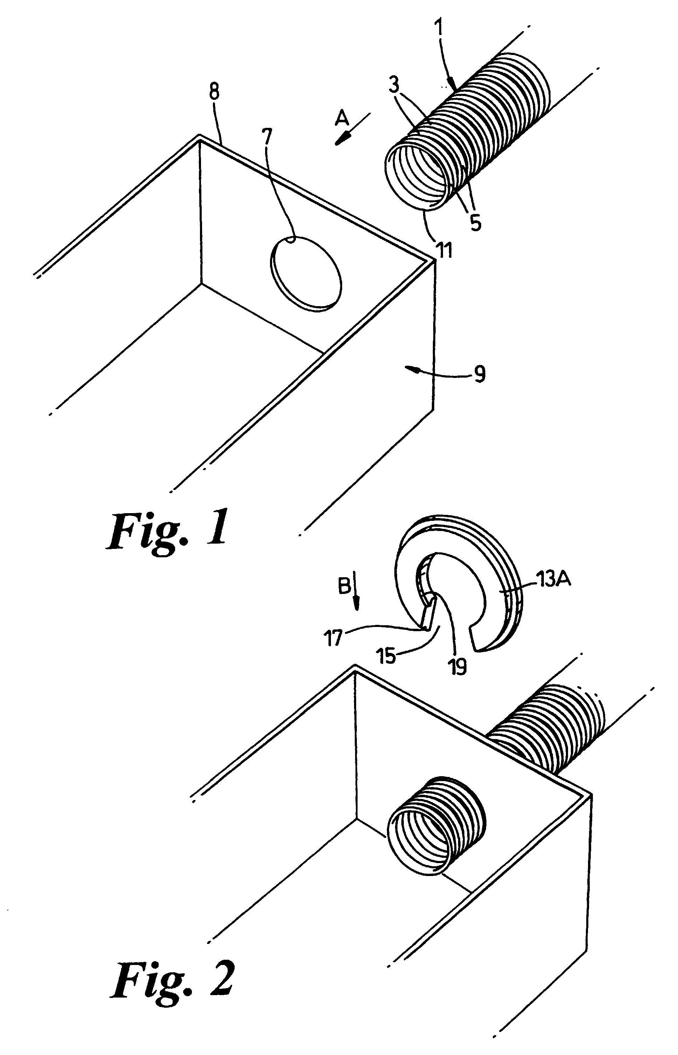

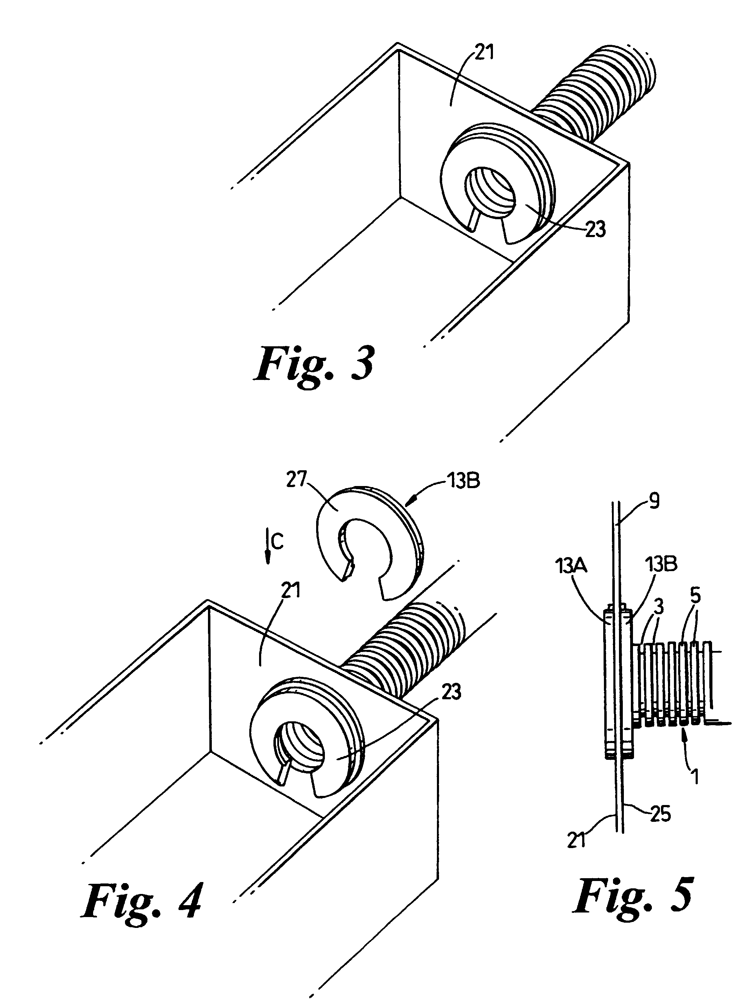

As best seen in Figures 2 and 3, part annular collar 13A is provided with a suitably fashioned internally directed flange 19 which extends from one longitudinal edge of the part annular collar. Optionally, the part annular collar can be provided with an externally directed flange 17. Flange 19 provides a complimentary groove for engaging with circumferencial projections 5 of sleeve 1. The dimensions of the part annular collar and flange 19 are such that the part annular collar may be pushed fitted over the sleeve 1 when moved downwardly in direction of arrow B. During this process the flange 19 will locate within one of the grooves 3 of sleeve 1, the part annular collar will open slightly, and the sleeve will compress slightly, until the sleeve has passed fully into the part annular collar where it will be firmly engaged, with the part annular collar and sleeve resuming their original shapes. The outer diameter of the projections 5 on the sleeve 1 and the inner diameter of the part annular collar 13A are such that the sleeve is a snug fit within the part annular collar once it has snapped into position with flange 19 located within a groove 3.

It will be appreciated from the foregoing that in another embodiment of the invention the part annular collar may be provided with a groove or grooved region on its internal surface and the sleeve may be provided with a ribbed region on its external surface. Thus the groove/ribbing arrangement can be interchangeable between the two components and is provided so as to ensure engagement between said components, the relative positioning of the groove/ribbing arrangement is not intended to limit the scope of the invention.

With reference to Figure 3, during installation of the duct assembly, the sleeve, having been positioned in a wall or partition traversing location, and with one end secured (typically by another sleeve end arrangement similar to that being currently described), will then extend out of the other side of the wall or partition. The sleeve may be pulled tight and then the part annular collar 13A located in position with its radial edge (not seen) is flush against an inner surface 21 of the wall or partition. The sleeve may project a distance within the duct through the wall or partition or optionally, the sleeve may then be severed at a position flush to the other radial edge 23 of the part annular collar. Accordingly the sleeve extends out of the wall or partition by only the thickness of the part annular collar and it lies wholly within the part annular collar.

The severing of the sleeve 1 may be carried out by means of an appropriate sharp knife. Alternatively, one of the part annular collars, i.e. 13A the one positioned so as to be flush with the inner surface 21 of the wall or partition, may be provided with a radially inwardly extending sharp projection (not shown) of a radial length sufficient to extend across the wall of the sleeve. When the part annular collar is snapped into position about the sleeve this projection will pierce the sleeve. Subsequent rotation of the part annular collar will cause the sleeve to be cut about its entire periphery.

With the first annular collar 13A in position about sleeve 1, the next step is to locate the second part annular collar 13B about sleeve 1. As best seen in Figure 4, the second part annular collar is positioned so that radial edge 27 is flush with an outer surface 25 of the wall or partition when the second part annular collar is moved downwardly in the direction of arrow C. The method of installation is as aforedescribed.

With reference to Figure 5, there is shown a cross-section of the duct assembly in a fully assembled form. In the assembled form, the two part annular collars (13 A and 13B) are positioned either side (21 and 25) of a wall or partition 9 and mate flush thereagainst thereby simultaneously acting to restrain and position sleeve 1.

The drawings illustrate an assembly, for example provided as a kit, consisting only of a length of sleeve 1 and at least one end arrangement member (i.e. a pair of part annular collars). In other embodiments of the product of the invention there is provided a plurality of end arrangement members so that a single sleeve can traverse a number of walls or partitions.

## Claims

1. A duct assembly comprising an externally grooved, plastics sleeve (1) and at least one sleeve end arrangement, characterised in that the arrangement includes a pair of part annular collars (13A ,13B) each having an internal groove engaging portion (19) and said assembly being capable of arrangement such that one of said collars abuts one side of a wall or partition (9, 21) and the other collar abuts the other side of the wall or partition (9, 25) and the sleeve extends through said wall or partition and said collars.

2. A duct assembly according to Claim 1 wherein an internal surface (19) of the part annular collar is grooved or ribbed so as to correspond with the external rib or groove (3) on the plastic sleeve (1).

3. A duct assembly according to either preceding claim wherein the part annular collars are resiliently deformable and made of plastics material by a moulding, machining or other suitable operation.

4. A duct assembly according to any preceding claim wherein the part annular collars are releasable whereby the sleeve can be easily removed for repair or maintenance purposes or the sleeve can be replaced.

5. A duct assembly according to any preceding claim wherein the part annular collars have smooth outer edges or alternatively the outer edges can be profiled, grooved or ribbed.

6. A duct assembly according to any preceding claim wherein an inner diameter of the part annular collars is commensurate with a diameter of the sleeve.

7. A duct assembly according to any preceding claim wherein an outer diameter of each part annular collar is at least 10% to 20% greater than an inner diameter, thus providing a substantial area of contact between the collar(s) and wall or partition.

8. A method of installing a wall or partition traversing duct for a cable or pipe, the method comprising providing a length of externally grooved plastics sleeve in a wall or partition traversing location, mounting a part annular collar, having a groove engaging portion, on the sleeve where it emerges from one side of the wall or partition, and mounting another part annular collar on the sleeve where it emerges from the other side of the wall or partition and optionally further including any of the features of Claims 2-7.

9. A method according to Claim 8 wherein the part annular collars are positioned either side of the wall or partition and about the sleeve, so that each part annular collar abuts a surface of the wall or partition so preventing movement of the sleeve within the duct, whereby in an assembled form, the sleeve is held securely and cannot be withdrawn or pushed into the duct.

10. A duct assembly comprising a kit of parts including a sleeve and at least two part annular collars.
